# EUROPEAN PATENT APPLICATION

(11) **EP 4 507 085 A1**
(43) Date of publication of application: **12.02.2025**
(21) Application number: 23784654.8
(22) Date of filing: 24.03.2023
(51) Int. Cl.: H01M 50/193, H01M 10/04, H01M 10/052, H01M 10/0585, H01M 50/184, H01M 50/186

(54) **POWER STORAGE DEVICE**

(30) Priority: 08.04.2022 JP 2022064675
(71) Applicant: KABUSHIKI KAISHA TOYOTA JIDOSHOKKI, Kariya-shi, Aichi 448-8671 (JP)
(72) Inventor: SAKAMOTO,Syunya, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: TBK
(86) International application number: PCT/JP2023/012010
(87) International publication number: WO 2023/195364

(57) **Abstract**

A power storage device (10) includes a stacked body (10a), in which multiple electrodes (11) are stacked, and a sealing body (15). The sealing body (15) includes seal members (40) made of a plastic and spacers (50) made of a plastic. The seal members (40) each include first seal sections (41) and a second seal section (42). Each electrode (11) includes a current collector (12) that includes a first surface (12a), to which one of the first seal section (41) is welded, and a second surface (12b), to which one of the second seal section (42) is welded. The spacers (50) each include a first spacer section (51) and a second spacer section (52). The first spacer section (51) is located between two of the current collectors (12) adjacent to each other in the stacking direction X. The first spacer section (51) is sandwiched between the first seal section (41) welded to one of the two of the current collectors (12) adjacent to each other and the first seal section (41) welded to the other current collector (12). The second seal sections (42) and the second spacer sections (52) are welded to each other to form a sealing portion (16) for sealing internal spaces (S). The degree of crystallinity of the plastic forming the spacers (50) is higher than the degree of crystallinity of the plastic forming the seal members (40).

## Description

### TECHNICAL FIELD

The present invention relates to a power storage device.

### BACKGROUND ART

The power storage device described in Patent Literature 1 includes a stacked body, in which multiple positive and negative electrodes are stacked, and a sealing body. The positive electrodes each include a current collector and a positive electrode active material layer provided on one side of the current collector. The negative electrodes each include a current collector and a negative electrode active material layer provided on one side of the current collector. The sealing body is disposed to surround the positive electrode active material layers and the negative electrode active material layers, and provides a seal between any two current collectors that are adjacent to each other.

### CITATION LIST

### Patent Literature

Patent Literature 1: Japanese Laid-Open Patent Publication No. 2022-16904

### SUMMARY OF INVENTION

### Technical Problem

In a case in which a sealing body made of plastic is welded to current collectors, thermal shrinkage occurs in parts of the sealing body welded to the current collectors. In the sealing body, there is a need to suppress deformation of the current collectors caused by the thermal shrinkage of the sealing body during welding to the current collectors while also preventing water permeation to the sealed spaces between the current collectors adjacent to each other.

### Solution to Problem

In a first aspect of the present invention, a power storage device includes a stacked body and a sealing body. The stacked body includes multiple electrodes formed by current collectors. A positive electrode active material layer is provided on a first surface of each current collector. A negative electrode active material layer is provided on a second surface of each current collector. The electrodes are stacked such that the first surface of the current collector of one of any two of the electrodes adjacent to each other in a stacking direction of the electrodes faces the second surface of the current collector of the other electrode. The sealing body is arranged to surround the positive electrode active material layers and the negative electrode active material layers. The sealing body provides a seal between any two of the current collectors adjacent to each other in the stacking direction. The sealing body includes seal members made of a plastic and spacers made of a plastic. The plastic forming the seal members and the plastic forming the spacers have a same main component. The seal members each include first seal sections and a second seal section. The first seal sections are respectively welded to the first surface and the second surface of the current collector of each of the electrodes. The second seal section extends outward from the first seal sections beyond an outer edge of the current collector. The spacers each include a first spacer section and a second spacer section. The first spacer section is located between two of the current collectors adjacent to each other in the stacking direction. The first spacer section is sandwiched between the first seal section welded to one of the two of the current collectors adjacent to each other and the first seal section welded to the other current collector. The second spacer section extends outward from the first spacer section beyond the outer edge of the current collector. The second seal sections and the second spacer sections are welded to each other to form a sealing portion for sealing internal spaces each located between two of the current collectors adjacent to each other in the stacking direction. A degree of crystallinity of the plastic forming the spacers is higher than a degree of crystallinity of the plastic forming the seal members.

A plastic having a relatively high degree of crystallinity tends to have a lower water vapor permeability than a plastic having a relatively low degree of crystallinity. Therefore, in a case in which a plastic having a relatively high degree of crystallinity is used for the sealing body, the permeation of water into the internal spaces is further suppressed as compared to a case in which a plastic having a relatively low degree of crystallinity is used for the sealing body.

On the other hand, a plastic having a relatively high degree of crystallinity tends to have a higher Young's modulus than a plastic having a relatively low degree of crystallinity. When a plastic having a relatively high degree of crystallinity is used for the sealing body, the shrinkage force transmitted to the current collectors due to thermal shrinkage of the sealing body at the time of welding to the current collectors is greater than that in a case in which a plastic having a relatively low degree of crystallinity is used for the sealing body. Accordingly, the current collectors are more likely to be deformed.

In the above-described configuration, the degree of crystallinity of the plastic forming the spacers is higher than the degree of crystallinity of the plastic forming the seal members. The first seal section of each seal member is welded to the first surface and the second surface of the corresponding current collectors. A plastic having a degree of crystallinity lower than the degree of crystallinity of the plastic forming the spacers is used as the plastic forming the seal members. This configuration reduces the shrinkage force transmitted to the current collectors due to thermal shrinkage of the seal members at the time of welding the seal members to the current collectors, as compared to a case in which the same plastic as the plastic forming the spacers is used as the plastic forming the seal members. This prevents deformation of the current collectors due to thermal shrinkage of the seal members that occurs when the seal members are welded to the current collectors.

The sealing portion, which is formed by the seal members and parts of the spacers that welded together, prevents leakage of electrolyte solution and infiltration of water. A plastic having a degree of crystallinity higher than the degree of crystallinity of the plastic forming the seal members is used as the plastic forming the spacers. The ratio of the plastic having a relatively high degree of crystallinity in the plastics forming the sealing portion is thus higher than that in a case in which the plastic forming the seal members is also used as the plastic forming the spacers. This prevents water permeation into the spaces that are located between the current collectors adjacent to each other and are sealed by the sealing body.

In the above-described power storage device, a dimension in the stacking direction of each spacer disposed between two of the current collectors adjacent to each other in the stacking direction is preferably greater than a combined dimension in the stacking direction of the seal members disposed between the two of the current collectors adjacent to each other.

The above-described configuration further increases the ratio of the plastic having a relatively high degree of crystallinity in the plastics forming the sealing portion as compared to a case in which, between the current collectors adjacent to each other in the stacking direction, the dimension of each spacer in the stacking direction is less than or equal to the dimension of each seal member in the stacking direction. This further effectively prevents water permeation into the spaces that are located between the current collectors adjacent to each other and are sealed by the sealing body.

In the above-described the power storage device, the seal members are preferably made of acid-modified polyethylene, and the spacers are preferably made of polyethylene.

In the above-described the power storage device, the current collectors each preferably include a positive electrode current collector and a negative electrode current collector, and each current collector is preferably formed by integrating the positive electrode current collector and the negative electrode current collector.

### Advantageous Effects of Invention

The present invention suppresses the occurrence of deformation of the current collectors when the sealing body is welded to the current collectors, and prevents water permeation into the spaces that are located between the current collectors adjacent to each other and are sealed by the sealing body.

### BRIEF DESCRIPTION OF DRAWINGS

Fig. 1 is a cross-sectional view of a power storage device.
Fig. 2 is an enlarged partial cross-sectional view of the power storage device.
Fig. 3 is a cross-sectional view for explaining a method of welding seal precursors to an electrode.
Fig. 4 is a cross-sectional view showing the electrode integrated with a seal member.
Fig. 5 is a cross-sectional view for explaining a method of welding seal members and spacers to each other.

### DESCRIPTION OF EMBODIMENTS

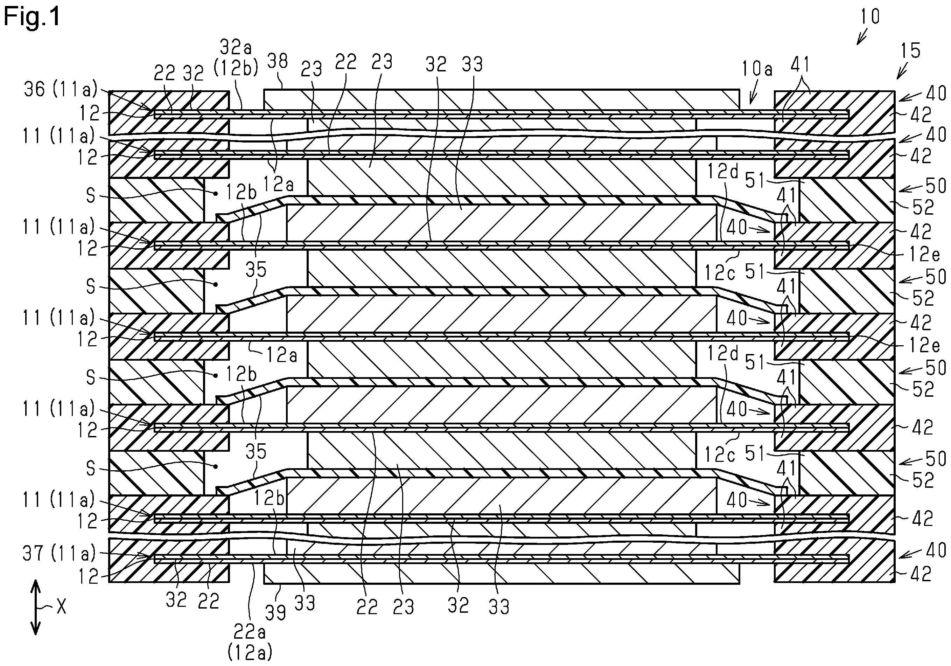

A power storage device according to an embodiment will now be described with reference to Figs. 1 to 5.

### Power Storage Device

As shown in Fig. 1, a power storage device 10 includes a sealing body 15 and a stacked body 10a, in which multiple electrodes 11, a positive terminal electrode 36, and a negative terminal electrode 37. The power storage device 10 in the present embodiment is a lithium-ion rechargeable battery. Hereinafter, the stacking direction of the electrodes 11 will be simply referred to as a stacking direction X.

### Electrodes

Each of the multiple electrodes 11 includes a current collector 12, a positive electrode active material layer 23, and a negative electrode active material layer 33. The current collector 12 is a sheet. The current collector 12 has a first surface 12a facing one side in the stacking direction X and a second surface 12b facing the other side in the stacking direction X. The multiple electrodes 11 are each a bipolar electrode that includes a current collector 12 provided with a positive electrode active material layer 23 on the first surface 12a and a negative electrode active material layer 33 on the second surface 12b. In the stacked body 10a, the electrodes 11 are stacked such that the first surface 12a of the current collector 12 of each electrode 11 faces the second surface 12b of the current collector 12 of the adjacent electrode 11 in the stacking direction X.

In plan view in the stacking direction X (hereinafter, simply referred to as plan view), the positive electrode active material layer 23 is formed in a central portion of the first surface 12a of each current collector 12. A peripheral portion of the first surface 12a of the current collector 12 in plan view is a positive electrode uncoated portion 12c, on which the positive electrode active material layer 23 is not provided. The positive electrode uncoated portion 12c is disposed to surround the positive electrode active material layer 23 in plan view. In plan view, the negative electrode active material layer 33 is formed in a central portion of the of the second surface 12b of each current collector 12. A peripheral portion of the second surface 12b of the current collector 12 in plan view is a negative electrode uncoated portion 12d, on which the negative electrode active material layer 33 is not provided. The negative electrode uncoated portion 12d is disposed to surround the negative electrode active material layer 33 in plan view.

Each positive electrode active material layer 23 and the corresponding negative electrode active material layer 33 are arranged to face each other in the stacking direction X. For example, the negative electrode active material layers 33 are formed to be slightly larger than the positive electrode active material layers 23. In plan view, the entire formation region of each positive electrode active material layer 23 is located within the formation region of each negative electrode active material layer 33.

### Positive Electrode Current Collector and Negative Electrode Current Collector

In the present embodiment, each current collector 12 is formed by integrating a sheet-shaped positive electrode current collector 22 and a sheet-shaped negative electrode current collector 32. The first surface 12a of each current collector 12 is formed by one surface of the positive electrode current collector 22, and the second surface 12b is formed by one surface of the negative electrode current collector 32. The positive electrode current collector 22 and the negative electrode current collector 32 may be integrated by bonding the surface of the positive electrode current collector 22 that is on the side opposite to the first surface 12a to the surface of the negative electrode current collector 32 that is on the side opposite to the second surface 12b.

The positive electrode current collectors 22 and the negative electrode current collectors 32 are chemically inert electric conductors for allowing current to continuously flow through the positive electrode active material layers 23 and the negative electrode active material layers 33 during discharging or charging of the lithium-ion rechargeable battery. The positive electrode current collectors 22 and the negative electrode current collectors 32 may be made of, for example, a metal, a conductive plastic, or a conductive inorganic material.

Examples of the conductive plastic include a plastic obtained by adding a conductive filler to a conductive polymer material or a non-conductive polymer material as necessary. The positive electrode current collectors 22 and the negative electrode current collectors 32 may each include one or more layers containing a metal or a conductive plastic. The surfaces of the positive electrode current collectors 22 and the negative electrode current collector 32 may be covered with a known protective layer. The surfaces of the positive electrode current collectors 22 and the negative electrode current collectors 32 may be plated with a metal by a known method such as a plating treatment.

The positive electrode current collectors 22 and the negative electrode current collectors 32 may include, for example, foils, sheets, films, wires, rods, meshes, clad materials, or the like. In a case in which the positive electrode current collectors 22 and the negative electrode current collectors 32 are metal foils, the positive electrode current collectors 22 and the negative electrode current collectors 32 may be, for example, aluminum foils, copper foils, nickel foils, titanium foils, or stainless steel foils. The positive electrode current collectors 22 and the negative electrode current collectors 32 may be alloy foils of any of the above-mentioned metals. When the positive electrode current collectors 22 and the negative electrode current collectors 32 are metal foils, the thicknesses of each positive electrode current collector 22 and each negative electrode current collector 32 are, for example, in a range of 1 µm to 100 µm. The positive electrode current collectors 22 of the present embodiment are aluminum foils. The negative electrode current collectors 32 of the present embodiment are copper foils. In order to stabilize the structure of the stacked body 10a, for example, the current collectors 12 of the positive terminal electrode 36 and the negative terminal electrode 37 and some of the current collectors 12 of the electrodes 11, which are formed of bipolar electrodes, may have a thickness greater than or equal to 100 µm.

The current collectors 12 are not limited to a form in which the positive electrode current collector 22 and the negative electrode current collector 32 are integrated. For example, each current collector 12 may be formed of a single current collector sheet formed of a metal, a conductive plastic, a conductive inorganic material, or the like. Alternatively, each current collector 12 may be formed of a single current collector sheet with a plating film, which is obtained by forming a film on one surface of the current collector sheet through plating. In these cases, one current collector 12 functions as the positive electrode current collector 22 and the negative electrode current collector 32.

### Details of Positive Electrode Active Material Layers and Negative Electrode Active Material Layers

Each positive electrode active material layer 23 includes a positive electrode active material capable of storing and releasing lithium ions as charge carriers. Examples of the positive electrode active material include polyanionic compounds such as olivine-type lithium iron phosphate (LiFePO₄), lithium composite metallic oxides having a layered rock-salt structure, and spinel-structure metal oxides. A material that can be used as the positive electrode active material of the power storage device 10 such as a lithium-ion rechargeable battery is employed as the positive electrode active material.

Each negative electrode active material layer 33 includes a negative electrode active material capable of storing and releasing charge carriers, which are lithium ions. The negative electrode active material is not particularly limited as long as it is a simple substance, an alloy, or a compound capable of storing and releasing charge carriers such as lithium ions. Examples of the negative electrode active material include Li or an element that can be alloyed with carbon, a metal compound, or lithium, and a compound thereof. Examples of the carbon include natural graphite, artificial graphite, hard carbon (non-graphitizable carbon), and soft carbon (graphitizable carbon). Examples of the artificial graphite include highly oriented graphite and mesocarbon microbeads. Examples of elements that can be alloyed with lithium include silicon and tin.

The positive electrode active material layer 23 and the negative electrode active material layer 33 may contain a conductive aid for increasing electric conductivity, a binder, electrolytes (polymer matrices, ion-conductive polymers, liquid electrolytes, and the like), electrolyte-supporting salts (lithium salts) for increasing ionic conductance, and the like as necessary. The types and compound ratios of other components contained in the positive electrode active material layer 23 and the negative electrode active material layer 33 are not particularly limited.

Examples of the conductive aid include acetylene black, carbon black, and graphite. Examples of the binder include the following: fluorine-containing resins such as polyvinylidene fluoride, polytetrafluoroethylene, and fluorine rubber; thermoplastic resins such as polypropylene and polyethylene; imide resins such as polyimide and polyamideimide; alkoxysilyl group-containing resin; acrylic resins such as poly(metha)acrylic; styrene-butadiene rubber; carboxymethyl cellulose; alginates such as sodium alginate and ammonium alginate; water-soluble cellulose ester crosslinked products; and starch-acrylic acid graft polymers. These binders may be used alone or in combination. As the solvent or dispersion medium, for example, water, N-methyl-2-pyrrolidone or the like is used.

### Separators

The power storage device 10 includes separators 35. Each separator 35 is disposed between a positive electrode active material layer 23 and a negative electrode active material layer 33. The separator 35 is a member that separates the positive electrode active material layer 23 and the negative electrode active material layer 33 from each other to prevent short circuits due to contact between electrodes and allows charge carriers such as lithium ions to pass therethrough.

The separators 35 are, for example, porous sheets or nonwoven fabric containing a polymer that absorbs and retains electrolyte. Examples of the electrolyte with which the separators 35 are impregnated include a liquid electrolyte containing a nonaqueous solvent and an electrolyte salt dissolved in the nonaqueous solvent, and a polymer gel electrolyte containing an electrolyte held in a polymer matrix. In the present embodiment, a liquid electrolyte is used as the electrolyte. As the electrolyte salt in the liquid electrolyte, known lithium salts such as LiClO₄, LiAsF₆, LiPF₆, LiBF₄, LiCF₃SO₃, LiN(FSO₂)₂, and LiN(CF₃SO₂) ₂ can be used. As the nonaqueous solvent, known solvents such as cyclic carbonates, cyclic esters, chain carbonates, chain esters, and ethers can be used. These known solvent materials may be used in combination of two or more thereof. Examples of the material forming the separators 35 include polypropylene, polyethylene, polyolefin, and polyester. The separators 35 may have a single-layer structure or a multilayer structure. The multilayer structure may include, for example, an adhesive layer, a ceramic layer as a heat-resistant layer, or the like.

### Positive Terminal Electrodes and Negative Terminal Electrodes

In the stacking direction X, the multiple electrodes 11 are each located between a positive terminal electrode 36 and a negative terminal electrode 37. The positive terminal electrode 36 includes a current collector 12 and a positive electrode active material layer 23 provided on the first surface 12a of the current collector 12. The positive terminal electrode 36 has the same configuration as the electrode 11 except that it does not include a negative electrode active material layer 33. The negative terminal electrode 37 includes a current collector 12 and a negative electrode active material layer 33 provided on the second surface 12b of the current collector 12. The negative terminal electrode 37 has the same configuration as the electrode 11 except that it does not include a positive electrode active material layer 23. The current collector 12 of the positive terminal electrode 36 is located at one end in the stacking direction X of the stacked body 10a. The current collector 12 of the negative terminal electrode 37 is located at the other end in the stacking direction X of the stacked body 10a.

The second surface 12b of the current collector 12 of the positive terminal electrode 36 forms an outer surface at one end in the stacking direction X of the stacked body 10a. This outer surface is referred to as a first outer surface 32a. The first surface 12a of the current collector 12 of the negative terminal electrode 37 forms an outer surface at the other end in the stacking direction X of the stacked body 10a. This outer surface is referred to as a second outer surface 22a. The first outer surface 32a and the second outer surface 22a are flat surfaces extending to be orthogonal to the stacking direction X.

### Internal Spaces

An internal space S is located between any two of the current collectors 12 adjacent to each other in the stacking direction X. Each internal space S is defined by a positive electrode current collector 22 and a negative electrode current collector 32 that are adjacent to each other in the stacking direction X, and the sealing body 15. One internal space S is defined for each pair of the positive electrode current collector 22 and the negative electrode current collector 32 that are adjacent to each other in the stacking direction X. Each internal space S accommodates a positive electrode active material layer 23, a negative electrode active material layer 33, a separator 35, and liquid electrolyte (not shown). Examples of the liquid electrolyte include an electrolyte solution containing a nonaqueous solvent and an electrolyte salt dissolved in the nonaqueous solvent.

### Positive Electrode Energization Plate and Negative Electrode Energization Plate

The power storage device 10 includes a positive electrode energization plate 38 and a negative electrode energization plate 39. The positive electrode energization plate 38 and the negative electrode energization plate 39 are formed of a material having a good conductivity. As the material forming the positive electrode energization plate 38 and the negative electrode energization plate 39, for example, a metal material such as aluminum, copper, or stainless steel can be used. The stacked body 10a is disposed between the positive electrode energization plate 38 and the negative electrode energization plate 39 in the stacking direction X.

The positive electrode energization plate 38 is electrically connected to the first outer surface 32a of the stacked body 10a. The negative electrode energization plate 39 is electrically connected to the second outer surface 22a of the stacked body 10a. Each of the positive electrode energization plate 38 and the negative electrode energization plate 39 is provided with a terminal (not shown). The power storage device 10 performs charging and discharging through terminals provided on the positive electrode energization plate 38 and the negative electrode energization plate 39.

### Sealing Body

The sealing body 15 is disposed to surround the multiple electrodes 11, the positive electrode active material layer 23 of the positive terminal electrode 36, and the negative electrode active material layer 33 of the negative terminal electrode 37 when viewed in the stacking direction X. Hereinafter, the electrodes 11, the positive terminal electrode 36, and the negative terminal electrode 37 may be simply referred to as electrodes 11a. The sealing body 15 provides a seal between any two of the current collectors 12 that are adjacent to each other in the stacking direction X.

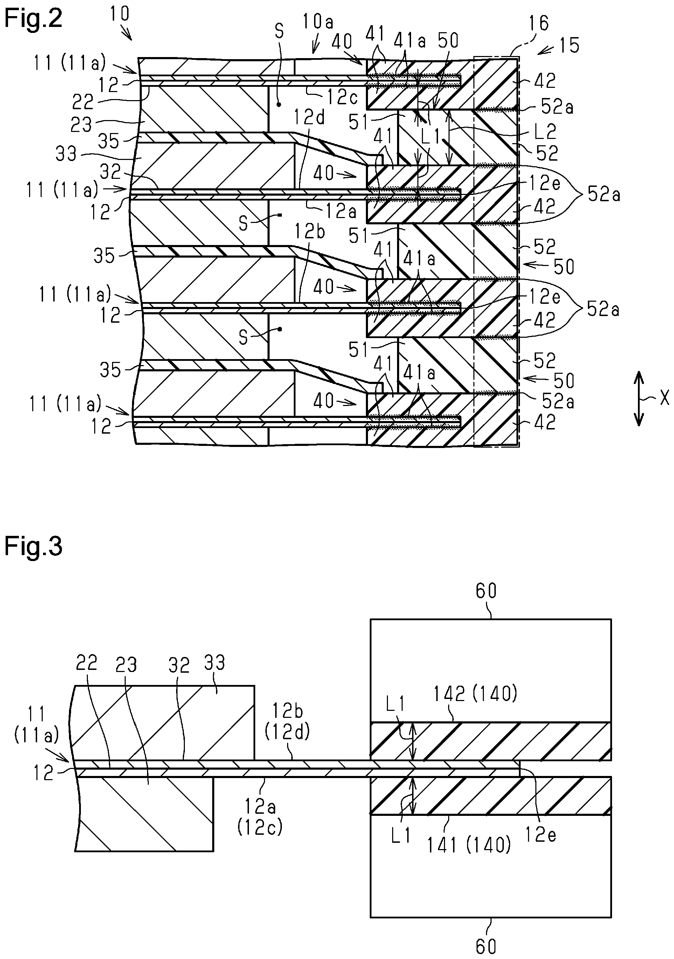

As shown in Fig. 2, the sealing body 15 includes multiple seal members 40 welded to the respective current collectors 12 of the electrodes 11a. Each of the multiple seal members 40 is made of plastic. Each of the seal members 40 includes first seal sections 41 and a second seal section 42. The first seal sections 41 are each disposed between the first surface 12a of the current collector 12 of one of two electrodes 11a adjacent to each other in the stacking direction X and the second surface 12b of the current collector 12 of the other electrode 11a. In other words, the first seal sections 41 are disposed inside outer edges 12e of the current collectors 12 when viewed in the stacking direction X. The first seal sections 41 are welded to the first surfaces 12a and the second surfaces 12b of the current collectors 12 of the electrodes 11a. In other words, the seal members 40 are welded to the first surfaces 12a and the second surfaces 12b of the current collectors 12 of the electrodes 11a. Examples of the method of welding the seal members 40 to the first surfaces 12a and the second surfaces 12b include known welding methods such as contact or non-contact thermal welding and ultrasonic welding. The first seal sections 41 are welded to the first surfaces 12a and the second surfaces 12b via first welding parts 41a. The first seal sections 41 are respectively welded to the positive electrode uncoated portions 12c and the negative electrode uncoated portions 12d.

The first seal sections 41 located on the positive electrode uncoated portions 12c are disposed to surround the positive electrode active material layers 23. The first seal sections 41 located on the negative electrode uncoated portions 12d are disposed to surround the negative electrode active material layers 33. Each first seal section 41 has the shape of a frame.

The second seal sections 42 extend outward beyond the outer edges 12e of the current collectors 12 from the first seal sections 41, each of which is located between two of the current collectors 12 that are adjacent to each other in the stacking direction X. Specifically, the second seal sections 42 are located on the outer side of the outer edges 12e of the current collectors 12 when viewed in the stacking direction X. In other words, each seal member 40 extends to the outside of the stacked body 10a from between two of the current collectors 12 adjacent to each other in the stacking direction X.

The second seal sections 42 are disposed to surround the current collectors 12 when viewed in the stacking direction X. Each second seal section 42 has the shape of a frame. Each second seal section 42 covers an end face connecting the first surface 12a and the second surface 12b of the corresponding current collector 12. Each second seal section 42 also connects, in the stacking direction X, the outer periphery of the first seal section 41 located on the corresponding positive electrode uncoated portion 12c to the outer periphery of the first seal section 41 located on the corresponding negative electrode uncoated portion 12d.

The sealing body 15 includes multiple spacers 50. The spacers 50 are made of plastic. Each of the spacer 50 includes a first spacer section 51 and a second spacer section 52. The first spacer sections 51 overlap with the first seal sections 41 in the stacking direction X. The second spacer sections 52 overlap with the second seal sections 42 in the stacking direction X.

Each first spacer section 51 is located between two of the current collectors 12 that are adjacent to each other in the stacking direction X, and is sandwiched between the first seal section 41 located on a positive electrode uncoated portion 12c and the first seal section 41 located on a negative electrode uncoated portion 12d. Accordingly, the first spacer sections 51 are each located between two of the current collectors 12 that are adjacent to each other in the stacking direction X. Each first spacer section 51 is sandwiched between the first seal section 41 welded to one of the current collectors 12 and the first seal section 41 welded to the other current collector 12. The first spacer sections 51 are disposed to surround the positive electrode active material layers 23 and the negative electrode active material layers 33 when viewed in the stacking direction X. Each first spacer section 51 has the shape of a frame.

The opposite surfaces of each first spacer section 51 in the stacking direction X are not welded to the first seal sections 41. Therefore, the first spacer section 51 is not welded to the current collectors 12. The opposite surfaces of the first spacer section 51 in the stacking direction X may contact or be separate from the first seal sections 41.

Each set of the first seal sections 41 and the corresponding first spacer section 51 is located between two of the current collectors 12 that are adjacent to each other in the stacking direction X. Thus, each set of the first seal sections 41 and the corresponding first spacer section 51 maintains the distance between the positive electrode current collector 22 of one of the two current collectors 12 adjacent to each other in the stacking direction X and the negative electrode current collector 32 of the other current collector 12, so as to insulate the positive electrode current collector 22 and the negative electrode current collector 32 from each other. In this manner, the seal members 40 and the spacers 50 prevent the occurrence of short circuits between each positive electrode current collector 22 and the corresponding negative electrode current collector 32.

Each second spacer section 52 is sandwiched between the second seal section 42 around one of two current collectors 12 adjacent to each other in the stacking direction X and the second seal section 42 around the other current collector 12. The second spacer section 52 extends from the first spacer section 51 to the outside of the stacked body 10a, and is positioned to surround the first spacer section 51. Specifically, the second spacer section 52 is located on the outer side of the outer edges 12e of the current collectors 12 when viewed in the stacking direction X. The second spacer section 52 extends outward from the first spacer section 51 beyond the outer edges 12e of the current collectors 12. Each second spacer section 52 has the shape of a frame.

Each second spacer section 52 is welded to the second seal sections 42 adjacent to the second spacer section 52 in the stacking direction X. Each second spacer section 52 includes second welding parts 52a at the boundaries with the second seal sections 42 adjacent to the second spacer section 52 in the stacking direction X. In the present embodiment, parts of each second spacer section 52 are welded to parts of the second seal sections 42 adjacent the second spacer section 52 in the stacking direction X. Specifically, the second welding parts 52a are not formed in inner peripheral portions of the second spacer section 52, which are in contact with the first spacer section 51, but are formed along outer peripheral portions of the second spacer section 52, which is located on the side opposite to the inner peripheral portions. Thus, the spacers 50 are welded to the seal members 40 outside the stacked body 10a. Examples of the method of welding the second seal sections 42 to the second spacer sections 52 include known welding methods such as contact or non-contact thermal welding and ultrasonic welding.

Outside the stacked body 10a, the second seal sections 42 and the second spacer sections 52 are integrated by the second welding parts 52a. All of the second seal sections 42 and the second spacer sections 52 provided in the power storage device 10 are integrated. In this manner, the second seal sections 42 and the second spacer sections 52 are welded together to form a sealing portion 16. The sealing portion 16 has a tubular shape extending in the stacking direction X. The sealing portion 16 is disposed so as to surround the multiple current collectors 12 from the outside of the stacked body 10a when viewed in the stacking direction X.

The sealing portion 16 seals the internal spaces S each located between two of the current collectors 12 adjacent to each other in the stacking direction X. The sealing portion 16 prevents water from entering the internal spaces S from the outside of the power storage device 10. The sealing portion 16 prevents leakage of the liquid electrolyte accommodated in the internal spaces S to the outside of the power storage device 10.

The dimension of each first seal section 41 in the stacking direction X is referred to as a seal dimension L1. The dimension of each first spacer section 51 in the stacking direction X is referred to as a spacer dimension L2. Between any two of the current collectors 12 adjacent to each other in the stacking direction X, a first seal section 41 welded to one of the current collectors 12 and a first seal section 41 welded to the other of the current collectors 12 are disposed. Therefore, between any two of the current collectors 12 adjacent to each other in the stacking direction X, the combined dimension of the seal members 40 in the stacking direction X is a seal dimension L3, which is the sum of the seal dimensions L1 of two first seal sections 41. The seal dimension L3 corresponds to the combined dimension in the stacking direction X of the seal members 40 disposed between the current collectors 12 adjacent to each other in the stacking direction X. The spacer dimension L2 corresponds to the dimension in the stacking direction X of the spacer 50 disposed between the current collectors 12 adjacent to each other in the stacking direction X.

The spacer dimension L2 is greater than the seal dimension L3. That is, the dimension in the stacking direction X of the spacer 50 disposed between the current collectors 12 adjacent to each other in the stacking direction X is greater than the dimension in the stacking direction X of the seal members 40 disposed between the current collectors 12 adjacent to each other.

Further, the spacer dimension L2 may be substantially the same as the seal dimension L3 or slightly less than the seal dimension L3. Even in such a case, the spacer dimension L2 is greater than the seal dimension L1 as in the present embodiment, in which the spacer dimension L2 is greater than the seal dimension L3.

The plastics forming the seal members 40 and the spacers 50 are plastics having the same main component. The seal members 40 are made of, for example, an acid-modified polyolefin-based plastic that contains a polyolefin-based plastic as a main component and also contains an acid-modified group. The spacers 50 are made of, for example, a non-acid-modified polyolefin-based plastic that contains the same polyolefin-based plastic as that in the seal members 40 as a main component and also contains no acid-modified group. The seal members 40 of the present embodiment are made of acid-modified polyethylene. The spacers 50 of the present embodiment are made of polyethylene. Among plastics having the same main component, the degree of crystallinity of a plastic that is not acid-modified tends to be higher than the degree of crystallinity of a plastic that is acid-modified. Accordingly, the degree of crystallinity of the plastic forming the spacers 50 is higher than the degree of crystallinity of the plastic forming the seal members 40.

Each seal member 40 may have a sandwich structure in which non-modified polyethylene (normal polyethylene) is sandwiched between two blocks of acid-modified polyethylene. Even if each seal member 40 has the sandwich structure as described above, since the spacers 50 are made of normal polyethylene, the relationship between the degree of crystallinity of the seal members 40 and the degree of crystallinity of the spacer 50 is the same as that in the present embodiment, in which the seal members 40 are made of acid-modified polyethylene. That is, the degree of crystallinity of the spacers 50 is higher than the degree of crystallinity of the seal members 40.

The degree of crystallinity refers to the proportion of the weight of the crystalline part to the total weight of the polymer solid. The degree of crystallinity can be measured by X-ray diffraction using known methods. Additionally, the degree of crystallinity can be indicated by the crystallization temperature. The crystallization temperature is, for example, the exothermic peak temperature during cooling in differential scanning calorimetry (DSC). The higher the degree of crystallinity of a plastic, the higher the ratio of crystalline portions to amorphous portions, such as side chains or acid-modified groups, in the plastic, becomes. The seal members 40 of the present embodiment, made of acid-modified polyethylene, and the spacers 50 of the present embodiment, made of polyethylene, were measured by differential scanning calorimetry at a temperature increase rate of 10°C/min and at a temperature decrease rate of 30°C/min. The crystallization temperature of the seal members 40 was 106°C, and the crystallization temperature of the spacers 50 was 114°C. In the present embodiment, the degree of crystallinity of the plastic forming the spacers 50 is higher than the degree of crystallinity of the plastic forming the seal members 40.

### Method of Manufacturing Power Storage Device

Next, a method of manufacturing the power storage device 10 will be described. Although the following description will be made using the electrode 11, the positive terminal electrode 36 and the negative terminal electrode 37 are manufactured in the same manner.

As shown in Fig. 3, when the power storage device 10 is manufactured, seal precursors 140 are disposed on each electrode 11. The seal precursors 140 are precursors of the seal members 40. The seal precursors 140 of the present embodiment are made of acid-modified polyethylene. The seal precursors 140 each have the shape of a frame. The seal precursors 140 are respectively disposed on the first surface 12a and the second surface 12b of a current collector 12. The current collector 12 is sandwiched between the two seal precursors 140 from the opposite sides in the thickness direction of the current collector 12. The seal precursors 140 protrude outward beyond the outer edge 12e of the current collector 12 on the first surface 12a and the second surface 12b of the current collector 12.

The seal precursor 140 disposed on the first surface 12a is also referred to as a first seal precursor 141. The first seal precursor 141 is positioned so as to surround the positive electrode active material layer 23 when viewed in the stacking direction X. The seal precursor 140 disposed on the second surface 12b is also referred to as a second seal precursor 142. The second seal precursor 142 is positioned so as to surround the negative electrode active material layer 33 when viewed in the stacking direction X.

Subsequently, the seal precursors 140 are welded to the current collector 12 of the electrode 11. The welding of the seal precursors 140 to the current collector 12 may be performed by thermal welding using, for example, two welding jigs 60. The welding jigs 60 are, for example, impulse sealers each having a heating wire. In this case, the two welding jigs 60 are brought into contact with the first seal precursor 141 and the second seal precursor 142 from the opposite sides in the thickness direction of the current collector 12. The first seal precursor 141 and the second seal precursor 142 are melted by receiving heat transferred from the welding jigs 60.

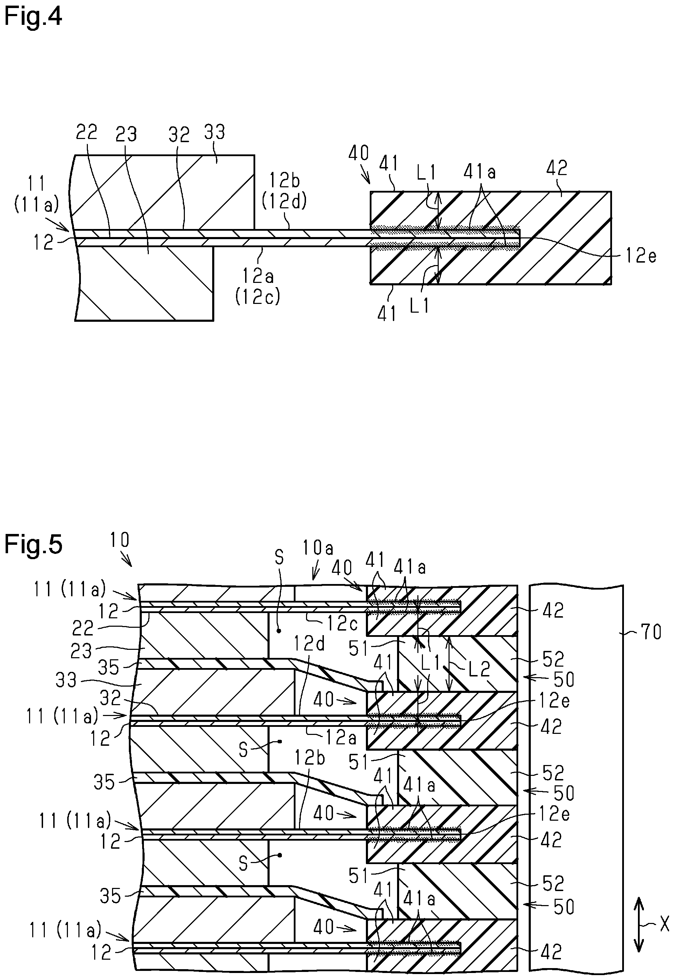

As shown in Figs. 3 and 4, when the first seal precursor 141 and the second seal precursor 142 are melted by receiving heat transferred from the welding jigs 60, the first seal precursor 141 is welded to the first surface 12a, and the second seal precursor 142 is welded to the second surface 12b. In addition, the portions of the first seal precursor 141 and the second seal precursor 142 that protrude outward beyond the outer edge 12e of the current collector 12 are welded to each other. Accordingly, the seal member 40 is formed in which the outer peripheral portion of the first seal section 41 positioned on the first surface 12a and the outer peripheral portion of the first seal section 41 positioned on the second surface 12b are connected by the second seal section 42.

As shown in Fig. 4, the first welding parts 41a are respectively formed at the boundary between the first seal section 41 located on the first surface 12a and the positive electrode current collector 22, and at the boundary between the first seal section 41 located on the second surface 12b and the negative electrode current collector 32. Welding the seal member 40 to the current collector 12 integrates the electrode 11 and the seal member 40.

As shown in Fig. 5, the electrodes 11a, each of which is integrated with a seal member 40, the separators 35, and the spacers 50 are sequentially stacked in the stacking direction X. At this time, a separator 35 is interposed between the positive electrode active material layer 23 of one of any two electrodes 11a adjacent to each other in the stacking direction X and the negative electrode active material layer 33 of the other electrode 11a. As a result, the stacked body 10a is formed. Also, a spacer 50 is interposed between the seal member 40 integrated with one of any two electrodes 11a adjacent to each other in the stacking direction X and the seal member 40 integrated with the other electrode 11a.

The first spacer sections 51 of the spacers 50 overlap with the first seal sections 41 in the stacking direction X. The second spacer sections 52 of the spacers 50 overlap with the second seal sections 42 in the stacking direction X. Each spacer 50 is disposed between two of the seal members 40 adjacent to each other in the stacking direction X such that the outer peripheral end of the spacer 50 and the outer peripheral ends of the seal members 40 are aligned with each other when viewed in the stacking direction X. Accordingly, the second seal sections 42 and the second spacer sections 52 are located outside the stacked body 10a.

Next, the seal members 40 and the spacers 50 are welded together. The seal members 40 and the spacers 50 may be welded together by non-contact thermal welding using a welding jig 70, for example. The welding jig 70 is, for example, an infrared heater. In this case, the welding jig 70 is disposed on the outer side of the stacked body 10a so as to face the seal members 40 and the spacers 50 in a state of being separated from the seal members 40 and the spacers 50 in a direction intersecting the stacking direction X. Parts of the second seal sections 42 and parts of the second spacer sections 52 are heated and melted by the infrared rays irradiated from the welding jig 70. Specifically, a part of the outer peripheral portion of each second seal section 42 facing the welding jig 70 and a part of the outer peripheral portion of each second spacer section 52 facing the welding jig 70 are melted.

As shown in Figs. 2 and 5, when the second seal sections 42 and the second spacer sections 52 are melted by the welding jig 70, the second seal sections 42 and the second spacer sections 52 are welded to each other. Specifically, a part of the melted outer peripheral portion of each second seal section 42 and a part of the melted outer peripheral portion of each second spacer section 52 are welded to each other. As a result, the spacers 50 are integrated with the seal members 40. In the stacking direction X, the second seal sections 42 and parts of the second spacer sections 52 are welded together via the second welding parts 52a. The second seal sections 42 and the second spacer sections 52 are welded to each other, so that the second seal sections 42 and the second spacer sections 52 are integrated. The sealing portion 16 is formed by the integrated second seal sections 42 and second spacer sections 52.

### Operation and Advantages

The above-described embodiment has the following operation and advantages.
(1) A plastic having a relatively high degree of crystallinity tends to have a lower water vapor permeability than a plastic having a relatively low degree of crystallinity. Therefore, in a case in which a plastic having a relatively high degree of crystallinity is used for the sealing body 15, the permeation of water into the internal spaces S is further suppressed as compared to a case in which a plastic having a relatively low degree of crystallinity is used for the sealing body 15.

On the other hand, a plastic having a relatively high degree of crystallinity tends to have a higher Young's modulus than a plastic having a relatively low degree of crystallinity. When a plastic having a relatively high degree of crystallinity is used for the sealing body 15, the shrinkage force transmitted to the current collectors 12 due to thermal shrinkage of the sealing body 15 at the time of welding to the current collectors 12 is greater than that in a case in which a plastic having a relatively low degree of crystallinity is used for the sealing body 15. Accordingly, the current collectors 12 are more likely to be deformed.

In the above-described embodiment, the degree of crystallinity of the plastic forming the spacers 50 is higher than the degree of crystallinity of the plastic forming the seal members 40. The first seal section 41 of each seal member 40 is welded to the first surface 12a and the second surface 12b of the corresponding current collectors 12. A plastic having a degree of crystallinity lower than the degree of crystallinity of the plastic forming the spacers 50 is used as the plastic forming the seal members 40. This configuration reduces the shrinkage force transmitted to the current collectors 12 due to thermal shrinkage of the seal members 40 at the time of welding the seal members 40 to the current collectors 12, as compared to a case in which the same plastic as the plastic forming the spacers 50 is used as the plastic forming the seal members 40. This prevents deformation of the current collectors 12 due to thermal shrinkage of the seal members 40 that occurs when the seal members 40 are welded to the current collectors 12.

The spacers 50 are welded to the seal members 40 and are not welded to the current collectors 12. The sealing portion 16, which is formed by the seal members 40 and parts of the spacers 50 that are welded together, prevents leakage of electrolyte solution and infiltration of water. A plastic having a degree of crystallinity higher than the degree of crystallinity of the plastic forming the seal members 40 is used as the plastic forming the spacers 50. The ratio of the plastic having a relatively high degree of crystallinity in the plastics forming the sealing portion 16 is thus higher than that in a case in which the plastic forming the seal members 40 is also used as the plastic forming the spacers 50. This prevents water permeation into the spaces that are located between the current collectors 12 adjacent to each other and are sealed by the sealing body 15. In addition, since the spacers 50 are not welded to the current collectors 12, the current collectors 12 are prevented from being wrinkled or damaged.

(2) Between any two of the current collectors 12 adjacent to each other in the stacking direction X, the dimension of the spacer 50 in the stacking direction X is greater than the combined dimension of the seal members 40 in the stacking direction X. Thus, the above-described embodiment further increases the ratio of the plastic having a relatively high degree of crystallinity to the plastic forming the sealing portion 16 as compared to a case in which, between any two of the current collectors 12 adjacent to each other in the stacking direction X, the dimension of the spacer 50 in the stacking direction X is less than or equal to the combined dimension of the seal members 40 in the stacking direction X. This further effectively prevents water permeation into the spaces that are located between the current collectors 12 adjacent to each other and are sealed by the sealing body 15.

Between any two of the current collectors 12 adjacent to each other in the stacking direction X, the dimension of the spacer 50 in the stacking direction X may be substantially the same as the combined dimension of the seal members 40 in the stacking direction X or may be slightly less than the combined dimension of the seal members 40 in the stacking direction X. Even in this case, since the sealing body 15 is formed of the spacers 50 made of a material having a relatively high degree of crystallinity and the seal members 40, the sealing performance of the sealing body 15 is improved as compared to a case in which the sealing body 15 is formed of only the seal members 40. Also, even in this configuration, the sealing performance of the sealing body 15 is improved as the ratio of the spacer dimension L2 to the seal dimension L3 increases. In addition, in the sealing body 15 of each cell, each spacer 50 having a relatively high degree of crystallinity is sandwiched between two of the seal members 40, which have a smaller thickness than the spacers 50. In the sealing body 15 of each cell, the spacers 50, which have a relatively high degree of crystallinity, are each placed at the center with the seal members 40 placed on the opposite sides. This arrangement mitigates the uneven crystallinity distribution. Therefore, the sealing performance of the sealing body 15 is made uniform on both the positive electrode side and the negative electrode side in each cell.

(3) The plastics forming the seal members 40 and the spacers 50 are plastics having the same main component. Therefore, when the seal members 40 and the spacers 50 are welded to each other, the seal members 40 and the spacers 50 can readily be made compatible with each other. Consequently, the seal members 40 and the spacers 50 are welded more firmly, which increases the strength of the sealing body 15.

### Modifications

The above-described embodiment may be modified as follows. The above-described embodiment and the following modifications can be combined as long as the combined modifications remain technically consistent with each other.

The materials of the seal members 40 and the spacers 50 can be changed as long as the degree of crystallinity of the plastic forming the spacers 50 is higher than the degree of crystallinity of the plastic forming the seal members 40, and the plastics forming the seal members 40 and the spacers 50 have the same main component. For example, the plastic forming the seal members 40 may be acid-modified polypropylene. The plastic forming the spacers 50 may be polypropylene. For example, the degree of crystallinity of the plastic forming the spacers 50 may be made higher than the degree of crystallinity of the plastic forming the seal members 40 by making the molecular weight of the base compound of the spacers 50 greater than the molecular weight of the base component of the seal members 40. The degree of crystallinity of the plastic forming the seal members 40 may be made lower than the degree of crystallinity of the plastic forming the spacers 50 by mixing an amorphous additive such as an elastomer into the material of the seal members 40.

Between any two of the current collectors 12 adjacent to each other in the stacking direction X, the dimension of the spacer 50 in the stacking direction X may be less than or equal to the combined dimension of the seal members 40 in the stacking direction X. In this case, the spacer dimension L2 is equal to or less than the seal dimension L3.

The power storage device 10 may include a binding member that binds the stacked body 10a. The binding member applies a binding load in the stacking direction X to a region in which the positive electrode active material layers 23 and the negative electrode active material layers 33 overlap with each other when the stacked body 10a is viewed in the stacking direction X. The binding member may include, for example, binding plates disposed at the opposite ends of the stacked body 10a in the stacking direction X, and a fastening member formed of bolts and nuts for fastening the binding plates to each other. In the case of this binding member, a binding load in the stacking direction X is applied to the stacked body 10a as a result of the binding plates being urged by the fastening members in directions approaching each other.

## Claims

1. A power storage device, comprising:
a stacked body including multiple electrodes formed by current collectors, a positive electrode active material layer being provided on a first surface of each current collector, a negative electrode active material layer being provided on a second surface of each current collector, and the electrodes being stacked such that the first surface of the current collector of one of any two of the electrodes adjacent to each other in a stacking direction of the electrodes faces the second surface of the current collector of the other electrode; and
a sealing body arranged to surround the positive electrode active material layers and the negative electrode active material layers, the sealing body providing a seal between any two of the current collectors adjacent to each other in the stacking direction,
wherein the power storage device is **characterized in that**
the sealing body includes seal members made of a plastic and spacers made of a plastic,
the plastic forming the seal members and the plastic forming the spacers have a same main component,
the seal members each include:
first seal sections that are respectively welded to the first surface and the second surface of the current collector of each of the electrodes; and
a second seal section that extends outward from the first seal sections beyond an outer edge of the current collector,
the spacers each include:
a first spacer section located between two of the current collectors adjacent to each other in the stacking direction, the first spacer section being sandwiched between the first seal section welded to one of the two of the current collectors adjacent to each other and the first seal section welded to the other current collector; and
a second spacer section that extends outward from the first spacer section beyond the outer edge of the current collector,
the second seal sections and the second spacer sections are welded to each other to form a sealing portion for sealing internal spaces each located between two of the current collectors adjacent to each other in the stacking direction, and
a degree of crystallinity of the plastic forming the spacers is higher than a degree of crystallinity of the plastic forming the seal members.

2. The power storage device according to claim 1, wherein
a dimension in the stacking direction of each spacer disposed between two of the current collectors adjacent to each other in the stacking direction is greater than a combined dimension in the stacking direction of the seal members disposed between the two of the current collectors adjacent to each other.

3. The power storage device according to claim 1 or 2, wherein
the seal members are made of acid-modified polyethylene, and
the spacers are made of polyethylene.

4. The power storage device according to claim 1 or 2, wherein
the current collectors each include a positive electrode current collector and a negative electrode current collector, and
each current collector is formed by integrating the positive electrode current collector and the negative electrode current collector.
